(19) Europäisches Patentamt
European Patent Office
Office européen des brevets

(11) **EP 1 501 207 B1**

## (12) EUROPÄISCHE PATENTSCHRIFT

(45) Veröffentlichungstag und Bekanntmachung des Hinweises auf die Patenterteilung:
**22.03.2017 Patentblatt 2017/12**

(21) Anmeldenummer: **04025574.7**

(22) Anmeldetag: **08.08.2001**

(51) Int Cl.:
**H04B 7/005** (2006.01)

(54) **Verfahren zur Regelung der Sendeleistung in einem Funksystem**

Method for regulating the transmit power in a radio system

Procédé pour la régulation de la puissance d'émission dans un système radio

(84) Benannte Vertragsstaaten:
**DE FR GB**

(30) Priorität: **17.08.2000 DE 10040228**

(43) Veröffentlichungstag der Anmeldung:
**26.01.2005 Patentblatt 2005/04**

(62) Dokumentnummer(n) der früheren Anmeldung(en) nach Art. 76 EPÜ:
**01962618.3 / 1 307 975**

(73) Patentinhaber: **Siemens Aktiengesellschaft 80333 München (DE)**

(72) Erfinder:
• **Raaf, Bernhard
82061 Neuried (DE)**
• **Senninger, Christian
81377 München (DE)**

(56) Entgegenhaltungen:
**EP-A- 0 926 842     WO-A-00/22757
DE-A- 19 821 519**

**Beschreibung**

Die vorliegende Erfindung betrifft ein Verfahren zur Regelung der Sendeleistung in einem Funksystem, insbesondere in einem Mobilfunksystem.

In Mobilfunksystemen, beispielsweise gemäß dem UMTS-Mobilfunkstandard ("Universal Mobile Telecommunication System"), ist eine kontinuierliche Regelung der Sendeleistung der Basisstationen und der Mobilstationen vorgesehen. Dabei erfolgt die Regelung der Sendeleistung insbesondere in Form eines geschlossenen Regelkreises ("Closed Loop Power Control"). Zu diesem Zweck überträgt ein Sender, beispielsweise eine Mobilstation, ein bestimmtes Sendesignal, welches auch als Pilotsignal bezeichnet wird, an den Empfänger, beispielsweise eine Basisstation. Das Pilotsignal umfasst dabei ein oder mehrere Pilotbits, welche von der Basisstation ausgewertet werden, um davon abhängig das auf dem jeweiligen Übertragungskanal empfangene Signal-Interferenz-Verhältnis ("Signal to Interference Ratio", SIR) zu bestimmen, welches mit einem Sollwert verglichen wird. Die Basisstation sendet daraufhin einen Leistungsregelungsbefehl an die Mobilstation, welcher abhängig von dem Vergleichsergebnis eine Erhöhung oder Erniedrigung der Sendeleistung der Mobilstation zum Ziel hat.

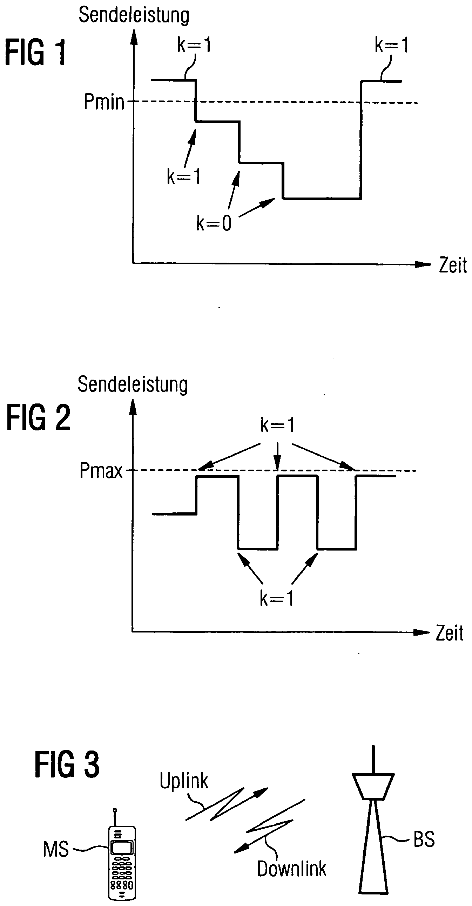

Zur Verdeutlichung dieses Vorgangs ist in Figur 3 die Kommunikation zwischen einer Mobilstation MS und einer Basisstation BS eines Mobilfunksystems, beispielsweise eines UMTS-Mobilfunksystems, dargestellt. Nachfolgend wird davon ausgegangen, dass die Sendeleistung der Mobilstation MS geregelt werden soll. Die Mobilstation MS überträgt über den von der Mobilstation zu der Basisstation gerichteten Übertragungskanal, welcher als "Uplink"-Übertragungskanal bezeichnet wird, das zuvor beschriebene Pilotsignal, welches von der Basisstation BS ausgewertet wird. Die Basisstation BS erzeugt daraufhin Leistungsregelungsbefehle, welche über den von der Basisstation zu der Mobilstation gerichteten Übertragungskanal, der als "Downlink"-Übertragungskanal bezeichnet wird, an die Mobilstation MS gesendet werden. In der Regel handelt es sich bei diesen Leistungsregelungsbefehlen lediglich um Informationen, welche die Mobilstation (MS) anweisen, ihre Sendeleistung um einen vorgegebenen Betrag zu erhöhen bzw. zu erniedrigen oder auch unverändert zu lassen. Im Prinzip kann der Leistungsregelungsbefehl somit lediglich ein Bit umfassen, welches abhängig von seinem Wert die Mobilstation MS anweist, seine Sendeleistung um den zuvor erwähnten Wert zu erhöhen bzw. zu erniedrigen.

Die Kommunikation zwischen der Mobilstation MS und der Basisstation BS erfolgt in Form einer Rahmen- und Zeitschlitzstruktur, wobei insbesondere in jedem Zeitschlitz ein neues Pilotsignal von der Mobilstation MS gesendet wird. Entsprechend wird von der Basisstation BS in jedem Zeitschlitz ein neuer Leistungsregelungsbefehl an die Mobilstation MS gesendet, welcher auf dem während des vorhergehenden Zeitschlitzes gesendeten Pilotsignal beruht.

Für den UMTS-Mobilfunkstandard ist ein sogenannter "Compressed Mode" definiert, welcher vorsieht, dass die über den Uplink- und/oder Downlink-Übertragungskanal zu übertragenden Informationen in komprimierter Form übertragen werden. Dies hat zur Folge, dass in einem im "Compressed Mode" gesendeten komprimierten Rahmen ein oder mehrere Zeitschlitze vorhanden sind, in denen keine Informationsübertragung stattfindet. Diese Zeitschlitze bilden eine Übertragungslücke ("Transmission Gap"), welche unter anderem für Nachbarkanalbeobachtungen, zur Vorbereitung von Handover-Vorgängen oder dergleichen genutzt werden kann.

Tritt im Uplink- und/oder Downlink-Kanal eine derartige Übertragungslücke auf, fehlt der Basisstation BS das zur Erzeugung der Leistungsregelungsbefehle erforderliche Pilotsignal der Mobilstation MS oder der Mobilstation MS der entsprechende Leistungsregelungsbefehl der Basisstation BS. Durch eine derartige Übertragungslücke im Uplink- und/oder Downlink-Übertragungskanal wird somit der zur Regelung der Sendeleistung der Mobilstation MS dienende geschlossene Regelkreis gestört, so dass während einer derartigen Übertragungslücke keine Leistungsregelungsbefehle gesendet werden können.

Die obige Beschreibung ist selbstverständlich im Prinzip auch auf eine Regelung der Sendeleistung der Basisstation BS anwendbar, wobei jedoch die vorliegende Erfindung nachfolgend - ohne Einschränkung der Allgemeinheit - anhand einer Regelung der Sendeleistung der Mobilstation MS beschrieben wird.

Um das zuvor mit dem Auftreten einer Übertragungslücke verbundene Problem bei der Sendeleistungsregelung zu lösen, wurde bezüglich des UMTS-Mobilfunkstandards (siehe 3G TS 25.214 V3.0.0) vorgeschlagen, anhand der in der Vergangenheit erzeugten Leistungsregelungsbefehle einen Schätzwert für den in Zukunft zu erwartenden Leistungsregelungsbefehl zu erzeugen, so dass dieser Schätzwert nach dem Auftreten einer Übertragungslücke der Regelung der Sendeleistung zu Grunde gelegt werden kann. Dabei kann der Schätzwert $\delta_i$, welcher die zu erwartende Sendeleistungsänderung nach einer Übertragungslücke beschreibt, insbesondere mit Hilfe der folgenden rekursiven Gleichungen ermittelt werden, wobei $TPC_i$ den im Zeitschlitz Nr. i empfangenen Leistungsregelungsbefehl und $\Delta TPC$ die zur Einstellung der Sendeleistung zur Verfügung stehende Schrittweite bezeichnet. $\delta_{i-1}$ bezeichnet den für den vorhergehenden Zeitschlitz i-1 ermittelten Schätzwert:

$$(1)\ \delta_i = 0{,}9375 \cdot \delta_{i-1} - 0{,}96875 \cdot TPC_i \cdot \Delta TPC$$

$$(2) \quad \delta_{i-1} = \delta_i$$

Bei der Regelung der Sendeleistung einer Mobilstation (Vergleiche Figur 3) soll der Schätzwert $\delta_i$ von der Mobilstation MS kontinuierlich in allen Zeitschlitzen neu berechnet werden, in denen sowohl ein Uplink-Pilotsignal als auch ein Downlink-Leistungsregelungsbefehl übertragen wird. Zudem wird der Schätzwert $\delta_i$ auch in dem ersten Zeitschlitz einer Uplink-Übertragungslücke berechnet, falls in dem entsprechenden Zeitschlitz ein Downlink-Leistungsregelungsbefehl übertragen worden ist. Der Wert $\delta_{i-1}$ wird immer dann auf 0 gesetzt, wenn der dem Uplink-Kanal zugeordnete Steuerkanal der Mobilstation Ms initiiert oder aktiviert wird. Des Weiteren wird $\delta_{i-1}$ am Ende des ersten Zeitschlitzes nach jeder Uplink-Übertragungslücke und am Ende des ersten Zeitschlitzes nach jeder Downlink-Übertragungslücke auf Null zurückgesetzt. Der Schätzwert für $\delta_i$ wird jeweils am Ende des ersten Zeitschlitzes nach jeder Uplink-Übertragungslücke auf 0 gesetzt.

Ein mit den obigen Formeln bzw. der zuvor beschriebenen Vorgehensweise verbundenes Problem tritt jedoch auf, wenn sich die von der Mobilstation MS emittierte Sendeleistung nahe einer vorgegebenen maximalen Sendeleistung Pmax bzw. minimalen Sendeleistung Pmin befindet. Es wurde für UMTS-Mobilfunksysteme vorgeschlagen, in der Nähe derartiger Sendeleistungsgrenzwerte eine Skalierung durchzuführen, um ein deutliches Unterschreiten der vorgegebenen minimalen Sendeleistung Pmin bzw. ein deutliches Überschreiten der vorgegebenen maximalen Sendeleistung Pmax zu verhindern. Durch diese Skalierung wird die obige Formel (1) durch folgende Formel ersetzt:

$$(3) \quad \delta_i = 0{,}9375 \cdot \delta_{i-1} - 0{,}96875 \cdot \text{TPC}_i \cdot \Delta\text{TPC} \cdot k$$

Dabei bezeichnet k einen Parameter, welcher den Wert "0" annimmt, wenn eine Skalierung durchgeführt werden soll, während der Parameter k den Wert "1" besitzt, wenn keine Skalierung angewendet und die Sendeleistung auf übliche Art und Weise ermittelt werden soll.

Der Parameter k wird herkömmlicherweise immer dann auf k=0 gesetzt, wenn die von der Mobilstation MS emittierte Sendeleistung auf Grund vorhergegangener Leistungsregelungsbefehle die vorgegebene maximale Sendeleistung Pmax überschreiten bzw. die vorgegebene minimale Sendeleistung Pmin unterschreiten würde. In anderen Fällen wird k=1 verwendet.

Die von der Mobilstation MS durchzuführende Skalierung kann derart gewählt sein, dass in der Nähe der minimalen Sendeleistung Pmin Leistungsregelungsbefehle, welche eine weitere Verringerung der Sendeleistung der Mobilstation zur Folge haben, grundsätzlich mit einem bestimmten Faktor, beispielsweise mit 1/4, multipliziert und somit abgeschwächt werden, während Leistungsregelungsbefehle, welche eine Erhöhung der Sendeleistung zur Folge haben, ohne Skalierung angewendet werden.

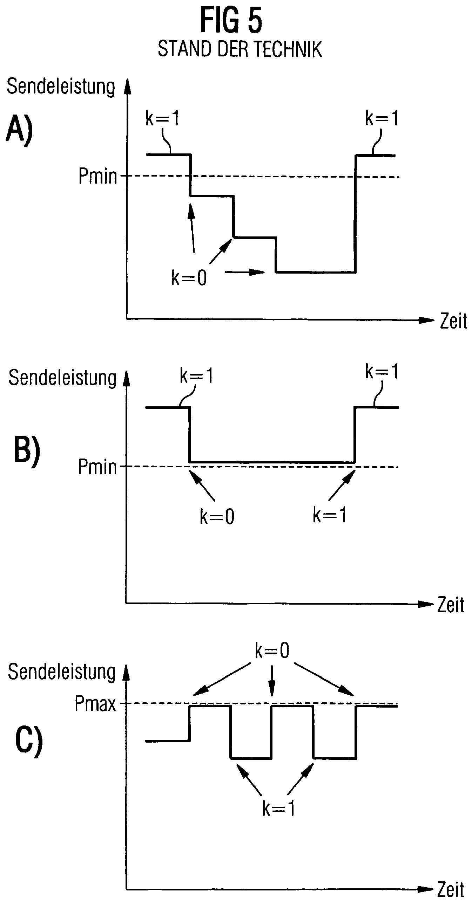

Ein entsprechender Verlauf der Sendeleistung ist in Figur 5A dargestellt. Wie aus Figur 5A ersichtlich ist, befindet sich die Mobilstation MS bereits nahe der minimalen Sendeleistungsgrenze Pmin. Anschließend erhält die Mobilstation einen Leistungsregelungsbefehl, welcher die Sendeleistung verringert, wodurch die minimale Sendeleistungsgrenze Pmin unterschritten werden würde. Die Mobilstation MS wendet die zuvor erwähnte Skalierung an und multipliziert jeden nachfolgenden Leistungsregelungsbefehl, welcher eine Verringerung der Sendeleistung zur Folge hat, mit dem Faktor 1/4, so dass diese Leistungsregelungsbefehle abgeschwächt werden. Da für diese Leistungsregelungsbefehle die Skalierung angewendet wird, besitzt der Parameter k den Wert k=0. Am Ende des in Figur 5A gezeigten Sendeleistungsverlaufs empfängt die Mobilstation MS einen Leistungsregelungsbefehl, der eine Erhöhung der Sendeleistung zur Folge hat. Dieser Leistungsregelungsbefehl wird ohne Skalierung umgesetzt, so dass für diesen Leistungsregelungsbefehl der Parameter k=1 beträgt. Betrachtet man den zuvor erläuterten Sendeleistungsverlauf hinsichtlich der zuvor beschriebenen $\delta$-Formel, so würden diejenigen Leistungsregelungsbefehle, welche zu einer Sendeleistung unterhalb der minimalen Sendeleistungsgrenze Pmin führen würden, in der $\delta$-Formeln durch setzen des Parameter k zu "0" nicht in die Tendenz der Leistungsregelungsbefehle eingehen, während Leistungsregelungsbefehle, welche einen Sprung der Sendeleistung nach oben bzw. über die minimale Sendeleistungsgrenze Pmin hinaus zur Folge haben, in den Schätzwert $\delta$ eingehen. Würde sich der in Figur 5A gezeigte Verlauf der Sendeleistung genau in der Art mehrfach hintereinander wiederholen, so würde als Tendenz der Sendeleistungsbefehle in der $\delta$-Formel eine deutliche Erhöhung der Sendeleistung berücksichtigt werden, was jedoch nicht der Realität entspricht.

Bei Anwendung des zuvor beschriebenen Skalierungsverfahrens steht es der Mobilstation MS frei, ob es ein Unterschreiten der minimalen Sendeleistungsgrenze Pmin zulässt oder nicht. Sollte die Mobilstation MS ein Unterschreiten der minimalen Sendeleistungsgrenze Pmin nicht unterstützen, kann sich bei Anwendung des herkömmlichen Skalierungsverfahrens ein Sendeleistungsverlauf ergeben, wie er in Figur 5B gezeigt ist. Bei den in Figur 5B gezeigten Beispiel wird grundsätzlich bei Erreichen der minimalen Sendeleistungsgrenze Pmin die Skalierung derartig aktiviert, dass mit dem Wert der minimalen Sendeleistungsgrenze Pmin gesendet wird. Bei Erreichen der minimalen Sendeleistungsgrenze Pmin wird wiederum der Parameter auf k=0 gesetzt. Ansonsten gilt wiederum das bereits anhand Figur 5A erläuterte Prinzip.

Ein ähnliches Problem kann auch an der maximalen Sendeleistungsgrenze Pmax auftreten, wobei die Skalierung beispielsweise derart gewählt sein kann, dass bei einem Leistungsregelungsbefehl, welcher zum Überschreiten der maximalen Sendeleistungsgrenze Pmax führen würde, dieser Leistungsregelungsbefehl derart reduziert wird, dass lediglich mit dem Betrag der maximalen Sendeleistung Pmax gesendet wird. Bei Auftreten eines Leistungsregelungsbefehls, welcher zum Unterschreiten der maximalen Sendeleitsungsgrenze führen würde, wird hingegen keine Skalierung angewendet.

Ein entsprechender Sendeleistungsverlauf ist in Figur 5C dargestellt. Wie aus Figur 5C ersichtlich ist, wird ein Leistungsregelungsbefehl, welcher zum Überschreiten der maximalen Sendeleistungsgrenze Pmax führen würde, dem Skalierungsprozess unterworfen, d.h. der Parameter k wird zu k=0 gesetzt, und der Leistungsregelungsbefehl wird derart reduziert, dass nur mit dem Wert der maximalen Sendeleistung Pmax gesendet wird. Tritt hingegen ein Leistungsregelungsbefehl auf, welcher die Sendeleistung der Mobilstation MS verringert, wird keine Skalierung angewendet (k=1), und dieser Leistungsregelungsbefehl wird voll umgesetzt, so dass die maximale Sendeleistungsgrenze deutlich unterschritten wird.

Analog zu den hinsichtlich der minimalen Sendeleistungsgrenze Pmin in Figur 5A und 5B gezeigten Beispielen tritt auch bei dem hinsichtlich der maximalen Sendeleistungsgrenze Pmax in Figur 5C gezeigten Beispiel das Problem auf, dass bei mehrmaliger Wiederholung sich als Tendenz ein Leistungsregelungsverhalten abzeichnen würde, welches nicht der Realität entspricht. Insbesondere würde bei dem in Figur 5C gezeigten Beispiel als Tendenz der Leistungsregelungsbefehle eine Verringerung der Sendeleistung berücksichtigt werden, welche nicht der Realität entspricht.

In Dokument DE 198,21,519 A ist ein Verfahren offenbart, bei dem ein aktueller Sendeleistungswert auf Basis von in der Vergangenheit erzeugten Leistungsregelungsbefehlen und einem Parameter bestimmt wird. Der Parameter hat einen Startwert von $K_0>1$ und wird nicht auf den Wert K=0 gesetzt, so dass vergangene Leistungsregelgungsbefehle bei der Bestimmung des aktuellen Sendeleistungswerts immer berücksichtigt werden.

Der vorliegenden Erfindung liegt daher die Aufgabe zu Grunde, ein verbessertes Verfahren zur Regelung der Sendeleistung in einem Funksystem, insbesondere einem Mobilfunksystem, vorzuschlagen, womit die zuvor erwähnten Probleme vermieden werden können und auch im Bereich der Sendeleistungsgrenzen eine exakte und realistische Regelung der Sendeleistung möglich ist.

Diese Aufgabe wird erfindungsgemäß durch ein Verfahren mit dem Merkmalen des Anspruches 1 gelöst. Die Unteransprüche definieren jeweils bevorzugte und vorteilhafte Ausführungsformen der vorliegenden Erfindung.

Erfindungsgemäß wird im Gegensatz zu dem zuvor an Hand Figur 5 beschriebenen Stand der Technik vorgeschlagen, für Leistungsregelungsbefehle, welche zum Überschreiten bzw. Erreichen der maximalen Sendeleistungsgrenze bzw. zum Unterschreiten bzw. Erreichen der minimalen Sendeleistungsgrenze führen würden, den Parameter k auf k=1 zusetzen. Bei Anwendung des zuvor beschriebenen Verfahrens zum Schätzen des Leistungsregelungswerts nach Auftreten der Übertragungslücke würde dies bedeuten, dass Leistungsregelungsbefehle, welche zum Überschreiten bzw. Erreichen der maximalen Sendeleistungsgrenze bzw. zum Unterschreiten bzw. Erreichen der minimalen Sendeleistungsgrenze führen würden, in der Eingangs erläuterten δ-Formel (3) berücksichtigt werden, da für diese Leistungsregelungsbefehle der Parameter auf den Wert k=1 gesetzt ist. Wie nachfolgend noch näher erläutert wird, kann durch diese Maßnahme bei Anwendung eines Skalierungsverfahrens an den Sendeleistungsgrenzen eine unerwünschte bzw. unbeabsichtigte Erniedrigung des Schätzwerts $\delta_i$ an der minimalen Sendeleistungsgrenze bzw. eine unbeabsichtigte Erhöhung des Schätzwerts $\delta_i$ an der maximalen Sendeleistungsgrenze, d.h. eine nicht der Realität entsprechende Schätzung des vergangenen Sendeleistungsregelungsverhaltens, vermieden werden.

Die vorliegende Erfindung eignet sich insbesondere für UMTS-Mobilfunksysteme, wo nach Auftreten einer Übertragungslücke ein Schätzwert für die Sendeleistungsregelung ermittelt wird. Grundsätzlich ist die vorliegende Erfindung jedoch auf beliebige Funksysteme anwendbar, bei denen im Bereich der Sendeleistungsgrenzen Skalierungsverfahren zur Anwendung kommen.

Die vorliegende Erfindung wird nachfolgend anhand von Beispielen näher unter Bezugnahme auf die beigefügte Zeichnung erläutert.

Figur 1 und Figur 2 zeigen beispielhafte Sendeleistungsverläufe zur Erläuterung der vorliegenden Erfindung,

Figur 3 zeigt eine Darstellung zur Erläuterung der Kommunikation zwischen einer Mobilstation und einer Basisstation in einem Mobilfunksystem,

Figur 4A und 4B zeigen Signalverläufe von $\delta_i$ zur Verdeutlichung der Vorteile der vorliegenden Erfindung, und

Figur 5A-C zeigen beispielhafte Sendeleistungsverläufe gemäß dem Stand der Technik.

In Figur 1 ist ein Sendeleistungsverlauf nach einem erfindungsgemäßen Skalierungsverfahren dargestellt, wobei der in Figur 1 gezeigte Sendeleistungsverlauf dem in Figur 5A gezeigten Sendeleistungsverlauf entspricht. Analog zu Figur 5A befindet sich die Mobilstation MS, deren Sendeleistung zu regeln ist, bereits nahe an der minimalen Sendeleistungsgrenze Pmin. Die Mobilstation MS erhält einen Leistungsregelungsbefehl, wodurch die minimale Sendeleistungsgrenze Pmin unterschritten werden würde. Im Gegensatz zu Figur 5A wird gemäß Figur 1 für diesen Leistungsregelungsbefehl der Parameter k auf k=1 gesetzt, so dass der Leistungsregelungsbefehl gemäß der zuvor beschriebenen ö-Formel (3) zur Berechnung des Schätzwerts $\delta_i$ für die Sendeleistungsregelung, welcher nach dem Auftreten einer Übertragungslücke zwischen der Mobilstation MS und der Basisstation BS zur Einstellung der Sendeleistung verwendet werden kann, berücksichtigt wird. Ansonsten erfolgt die Skalierung bzw. die Regelung der Sendeleistung wie zuvor anhand Figur 5A beschrieben, d.h. die nachfolgenden Leistungsregelungsbefehle, welche eine weitere Erniedrigung der Sendeleistung zur Folge haben, werden beispielsweise mit dem Faktor 1/4 multipliziert und somit abgeschwächt, wobei diese Befehle in der Formel (3) durch k=0 nicht berücksichtigt werden. Empfängt die Mobilstation MS einen Leistungsregelungsbefehl, welcher eine Erhöhung der Sendeleistung zur Folge hat, wird grundsätzlich keine Skalierung angewendet und k auf k=1 gesetzt, so dass diese Leistungsregelungsbefehle wiederum in der $\delta$-Formel (3) zur Berechnung des Schätzwerts $\delta_i$ berücksichtigt werden.

Erfindungsgemäß wird auch an der oberen Sendeleistungsgrenze Pmax ein Leistungsregelungsbefehl, welcher zum Überschreiten bzw. Erreichen dieser Sendeleistungsgrenze Pmax führen würde, in der $\delta$-Formel (3) berücksichtigt und k=1 gesetzt. Dies sei nachfolgend beispielhaft anhand des in Figur 2 gezeigten Sendeverlaufs verdeutlicht, welcher dem in Figur 5C gezeigten Sendeverlauf entspricht. Wie aus Figur 2 ersichtlich ist, wird im Gegensatz zu dem in Figur 5C gezeigten Beispiel für jeden Leistungsregelungsbefehl, welcher ein Überschreiten oder Erreichen der oberen Sendeleistungsgrenze Pmax zur Folge hat, der Parameter k auf k=1 gesetzt, so dass der entsprechende Leistungsregelungsbefehl in die Berechnung des Schätzwerts $\delta_i$ gemäß der zuvor beschriebenen Formel (3) eingeht. Ansonsten erfolgt die Berechnung des Sendeleistungsregelungsschätzwerts $\delta_i$ wie zuvor anhand Figur 5C beschrieben und für Leistungsregelungsbefehle, welche eine Verringerung der Sendeleistung zur Folge haben, wird ebenfalls k=1 gesetzt.

Ein dem in Figur 2 gezeigten Verlauf entsprechender Sendeleistungsverlauf kann selbstverständlich analog zu Figur 5B auch bei Begrenzung auf den minimalen Sendeleistungsgrenzwert Pmin erhalten werden, wobei für Leistungsregelungsbefehle, welche zum Erreichen bzw. Unterschreiten von Pmin führen würden, k=1 gesetzt wird.

Insgesamt wird somit erfindungsgemäß vorgeschlagen, Leistungsregelungsbefehle, welche zum Überschreiten oder Erreichen der maximalen Sendeleistung Pmax bzw. zum Unterschreiten oder Erreichen der minimalen Sendeleistung Pmin führen würden, in der obigen $\delta$-Formel (3) zu berücksichtigen, indem für diese Leistungsregelungsbefehle der Parameter entsprechend auf k=1 gesetzt wird.

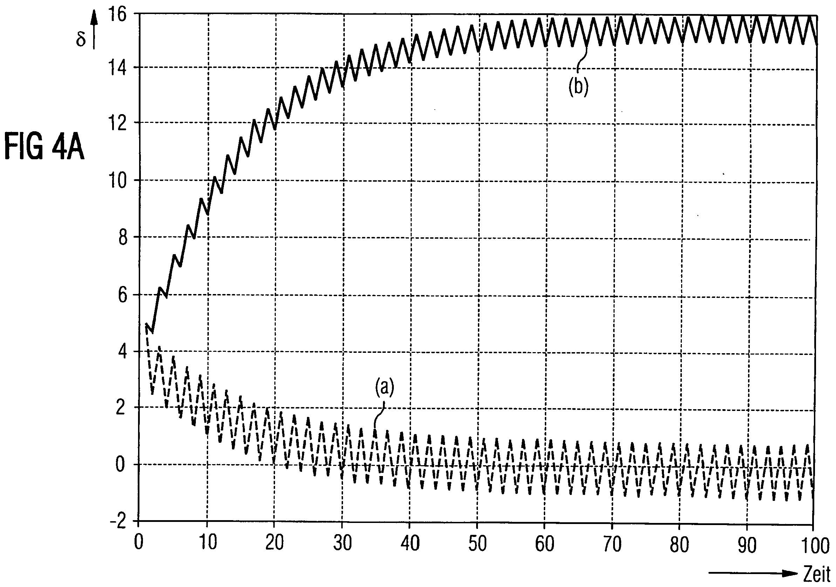

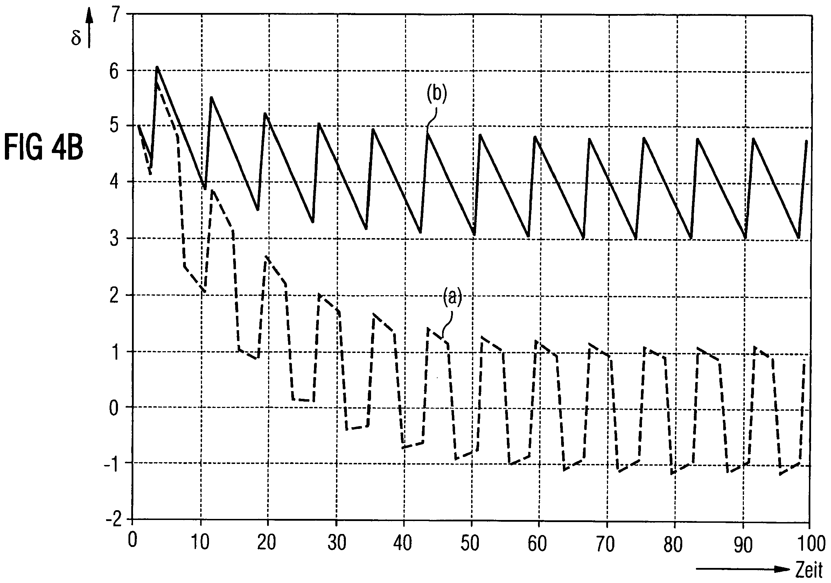

Die Auswirkung der vorliegenden Erfindung soll nachfolgend näher anhand der in Figur 4A und 4B gezeigten Signalverläufe verdeutlicht werden, wobei jeweils der gemäß der $\delta$-Formel (3) berechnete Schätzwert $\delta$ über der Zeit bzw. über der Anzahl der Zeitschlitze aufgetragen ist. Die Kennlinie (a) bezeichnet jeweils den sich bei Anwendung des erfindungsgemäßen Verfahren einstellenden Verlauf für den Schätzwert $\delta$, während die Kennlinie (b) den sich bei Anwendung des herkömmlichen Verfahrens (vgl. Figur 5) einstellenden Verlauf des Schätzwerts $\delta$ bezeichnet. Es wurde jeweils das Verhalten der $\delta$-Formel (3) für den Fall eines unendlich fortgesetzten Sendeleistungsverlaufs gemäß den Darstellungen von Figur 2 bzw. Figur 5C betrachtet, wobei $\delta$ zu Beginn mit 5 dBm vorbelegt ist und $\Delta TPC = 2dB$ gilt.

In Übereinstimmung mit dem erfindungsgemäßen Verfahren gehen auch Leistungsregelungsbefehle in die obige ö-Formel (3) bzw. in die Berechnung des Sendeleistungswerts $\delta$ ein, welche zum Überschreiten bzw. Erreichen der oberen Sendeleistungsgrenze Pmax führen würden. In der Darstellung von Figur 4B wird in jedem vierten Zeitschlitz der maximale Sendeleistungsgrenzwert Pmax entweder erreicht oder wieder verlassen. Aus Figur 4B ist ersichtlich, dass der Fehler bzw. die Abweichung der Kennlinie (b) von der erfindungsgemäßen Kennlinie (a) ca. 4 dB beträgt.

Sollte sich jedoch die Frequenz des Erreichens bzw. Verlassens der maximalen Sendeleistungsgrenze Pmax erhöhen, würde sich für die Kennlinie (b) ein größerer Fehler ergeben, was aus der Darstellung von Figur 4A deutlich wird.

Die zuvor anhand Figur 5 erläuterten Probleme, welche mit der Formel (3) verbunden sind, könnten alternativ beispielsweise gelöst werden, indem die $\delta$-Formel (3) wie folgt modifiziert wird:

$$(4) \quad \delta_i = 0{,}9375 \cdot \delta_{i-1} - \left(0{,}9675 \cdot TPC_i \cdot \Delta TPC\right)_{ausgeführt}$$

D.h., es wird für die $\delta$-Formel nicht die befohlene Sendeleistungsänderung, sondern die tatsächlich durchgeführte Sendungsleistungsänderung verwendet.

**Patentansprüche**

1. Verfahren zur Regelung der Sendeleistung in einem Funksystem, wobei

   - von einem Sender (MS) ein Sendesignal gesendet wird,
   - von einem Empfänger (BS) das Sendesignal des Senders empfangen und ausgewertet wird, um davon abhängig einen Leistungsregelungsbefehl zur Regelung der Sendeleistung des Senders zu erzeugen und an den Sender zu übertragen, und
   - die Sendeleistung des Senders nach Auftreten einer Übertragungslücke in dem zwischen dem Sender und dem Empfänger oder zwischen dem Empfänger und dem Sender definierten Übertragungskanal gemäß einem Schätzwert ($\delta$) eingestellt wird, welcher in der Vergangenheit für den Sender erzeugte Leistungsregelungsbefehle berücksichtigt, wobei die Ermittlung des Schätzwerts in Abhängigkeit von einem Parameter (k) erfolgt, welcher angibt, ob der jeweilige Leistungsregelungsbefehl bei der Ermittlung des Schätzwerts berücksichtigt werden soll oder nicht,

   **dadurch gekennzeichnet,**
   **dass** der Parameter für einen zweiten Leistungsregelungsbefehl unter der Bedingung auf einen Wert gesetzt wird, welcher keine Berücksichtigung des zweiten Leistungsregelungsbefehls bei der Ermittlung des Schätzwerts zur Folge hat, dass

   a) der zweite Leistungsregelungsbefehl unmittelbar auf einen ersten Leistungsregelungsbefehl nachfolgt und
   b) beide Leistungsregelungsbefehle ein Erreichen oder Überschreiten eines vorgegebenen oberen Grenzwerts (Pmax) bzw. ein Erreichen oder Unterschreiten eines vorgegebenen unteren Grenzwerts (Pmin) durch die Sendeleistung des Senders zur Folge haben würden.

2. Verfahren nach dem vorstehenden Anspruch, **dadurch gekennzeichnet, dass** der Parameter für den ersten Leistungsregelungsbefehl auf einen Wert gesetzt wird, welcher eine Berücksichtigung dieses Leistungsregelungsbefehls bei der Ermittlung des Schätzwerts zur Folge hat, wenn der erste Leistungsregelungsbefehl unmittelbar auf einen weiteren Leistungsregelungsbefehl nachfolgt, der kein Erreichen oder Über- bzw. Unterschreiten desselben Grenzwerts durch die Sendeleistung des Senders zur Folge haben würde.

3. Verfahren nach einem der vorstehenden Ansprüche, **dadurch gekennzeichnet,**
   **dass** der Schätzwert $\delta_i$ zum Zeitpunkt i gemäß folgender rekursiver Formel berechnet wird:

   $$\delta_i = 0{,}9375 \cdot \delta_{i-1} - 0{,}96875 \cdot \text{TPC}_i \cdot \Delta\text{TPC} \cdot k$$

   wobei $\delta_{i-1}$ den Leistungsschätzwert zum Zeitpunkt i-1, $\text{TPC}_i$ den von dem Sender (MS) zum Zeitpunkt i empfangenen Leistungsregelungsbefehl, $\Delta\text{TPC}$ eine Schrittweite, mit der die Sendeleistung des Senders (MS) eingestellt wird, und k den Parameter bezeichnet.

4. Verfahren nach Anspruch 3, **dadurch gekennzeichnet,**
   **dass** der Parameter k für den ersten Leistungsregelungsbefehl auf k=1 gesetzt wird.

5. Verfahren nach einem der beiden vorstehenden Ansprüche,
   **dadurch gekennzeichnet,**
   **dass** der Parameter k für den zweiten Leistungsregelungsbefehl auf k=0 gesetzt wird.

6. Verfahren nach einem der vorstehenden Ansprüche,
   **dadurch gekennzeichnet,**
   **dass** der Schätzwert ($\delta$) ein Leistungsregelungsschätzwert ist, wobei die Sendeleistungsregulierung des Senders (MS) nach Auftreten einer Übertragungslücke gemäß dem Leistungsregelungsschätzwert eingestellt wird.

7. Sendevorrichtung für ein Funksystem,
   wobei die Sendevorrichtung (MS) derart ausgestaltet ist, dass sie von einer anderen Sendevorrichtung (BS) des Funksystems gesendete Leistungsregelungsbefehle empfängt und zur Regelung der eigenen Sendeleistung verwendet, und

wobei die Sendevorrichtung derart ausgestaltet ist, dass sie ihre Sendeleistungsregulierung nach Auftreten einer Übertragungslücke in dem zwischen dem Sender und dem Empfänger (BS) oder zwischen dem Empfänger und dem Sender definierten Übertragungskanal gemäß einem Schätzwert ($\delta$) neu justiert, welcher in der Vergangenheit für den Sender erzeugte Leistungsregelungsbefehle berücksichtigt, wobei in dem Sender die Ermittlung des Schätzwerts in Abhängigkeit von einem Parameter (k) erfolgt, welcher für jeden Leistungsregelungsbefehl angibt, ob der entsprechende Leistungsregelungsbefehl bei der Ermittlung des Schätzwerts berücksichtigt werden soll oder nicht, **dadurch gekennzeichnet,**
**dass** die Sendevorrichtung (MS) zur Durchführung eines Verfahrens nach einem der vorstehenden Verfahrensansprüche ausgestaltet ist.

**Claims**

1. Method for controlling the transmission power in a radio system, in which

   - a transmission signal is transmitted by a transmitter (MS),
   - the transmission signal from the transmitter is received and evaluated by a receiver (BS) in order as a function of this to produce a power control command for controlling the transmission power of the transmitter and to transmit this to the transmitter, and
   - the transmission power of the transmitter is set on the basis of an estimated value ($\delta$) after the occurrence of a transmission gap in the transmission channel which is defined between the transmitter and the receiver or between the receiver and the transmitter, which estimated value takes account of power control commands produced for the transmitter in the past, with the estimated value being determined as a function of a parameter (k) which indicates whether the respective power control command is or is not intended to be taken into account in the determination of the estimated value,

   **characterized**
   **in that** the parameter for a second power control command is set to a value which results in the second power control command not being taken into account when determining the estimated value, under the condition that

   a) the second power control command directly succeeds a first power control command, and
   b) both power control commands would result in the transmission power of the transmitter reaching or exceeding a predetermined upper limit value (Pmax) or reaching or falling below a predetermined lower limit value (Pmin).

2. Method according to the preceding claim,
   **characterized**
   **in that** the parameter for the first power control command is set to a value which results in this power control command being taken into account when determining the estimated value if the first power control command directly succeeds a further power control command which would result in the transmission power of the transmitter not reaching or exceeding or falling below the same limit value.

3. Method according to either of the preceding claims,
   **characterized**
   **in that** the estimated value $\delta_i$ at the time i is calculated using the following recursive formula:

$$\delta_i = 0.9375 \cdot \delta_{i-1} - 0.96875 \cdot \text{TPC}_i \cdot \Delta\text{TPC} \cdot k$$

   where $\delta_{i-1}$ denotes the power estimated value at the time i-1, $\text{TPC}_i$ denotes the power control command received by the transmitter (MS) at the time i, $\Delta\text{TPC}$ denotes a step width using which the transmission power of the transmitter (MS) is set, and k denotes the parameter.

4. Method according to Claim 3,
   **characterized**
   **in that** the parameter k is set to k=1 for the first power control command.

5. Method according to either of the two preceding claims,

**characterized**

**in that** the parameter k is set to k=0 for the second power control command.

6. Method according to one of the preceding claims,
   **characterized**
   **in that** the estimated value (δ) is a power control estimated value, with the transmission power control for the transmitter (MS) being set on the basis of the power control estimated value after the occurrence of a transmission gap.

7. Transmitting apparatus for a radio system,
   in which the transmitting apparatus (MS) is designed such that it receives power control commands which are transmitted from another transmitting apparatus (BS) in the radio system, and uses them to control its own transmission power, and
   in which the transmitting apparatus is designed such that it readjusts its transmission power control on the basis of an estimated value (δ) after the occurrence of a transmission gap in the transmission channel which is defined between the transmitter and the receiver (BS) or between the receiver and the transmitter, which estimated value (δ) takes account of power control commands produced for the transmitter in the past, with the estimated value being determined in the transmitter as a function of a parameter (k) which indicates for each transmission power control whether the corresponding power control command should or should not be taken into account when determining the estimated value,
   **characterized**
   **in that** the transmitting apparatus (MS) is designed to carry out a method according to one of the preceding method claims.

**Revendications**

1. Procédé de régulation de la puissance d'émission dans un système radio, dans lequel

   - un signal d'émission est envoyé par un émetteur (MS),
   - le signal d'émission de l'émetteur est reçu et évalué par un récepteur (BS) afin de produire en conséquence une commande de régulation de puissance pour réguler la puissance d'émission de l'émetteur et de la transmettre à l'émetteur, et
   - la puissance d'émission de l'émetteur, après apparition d'une interruption de transmission dans la voie de transmission définie entre l'émetteur et le récepteur ou entre le récepteur et l'émetteur, est ajustée selon une valeur estimative (δ) qui prend en compte des commandes de régulation de puissance produites pour l'émetteur dans le passé, la valeur estimative étant déterminée en fonction d'un paramètre (k) qui indique si la commande de régulation de puissance respective doit être prise en compte ou non lors de la détermination de la valeur estimative,

   **caractérisé en ce que**
   le paramètre pour une deuxième commande de régulation de puissance est mis sur une valeur ne se traduisant pas par une prise en compte de la deuxième commande de régulation de puissance lors de la détermination de la valeur estimative, à condition que

   a) la deuxième commande de régulation de puissance vienne immédiatement après une première commande de régulation de puissance et que
   b) les deux commandes de régulation de puissance se traduisent par une atteinte ou un dépassement d'une valeur limite supérieure (Pmax) prédéterminée, respectivement une atteinte ou un sous-dépassement d'une valeur limite inférieure (Pmin) prédéterminée, par la puissance d'émission de l'émetteur.

2. Procédé selon la revendication précédente,
   **caractérisé en ce que**
   le paramètre pour la première commande de régulation de puissance est mis sur une valeur se traduisant par une prise en compte de cette commande de régulation de puissance lors de la détermination de la valeur estimative, si la première commande de régulation de puissance vient immédiatement après une autre commande de régulation de puissance laquelle ne se traduit pas par une atteinte ou un dépassement ou un sous-dépassement de la même valeur limite par la puissance d'émission de l'émetteur.

**3.** Procédé selon l'une des revendications précédentes, **caractérisé en ce que**
la valeur estimative ($\delta_i$) à l'instant i est calculée selon la formule récursive suivante :

$$\delta_i = 0{,}9375 \cdot \delta_{i-1} - 0{,}96875 \cdot TPC_i \cdot \Delta TPC \cdot k,$$

$\delta_{i-1}$ désignant la valeur estimative de puissance à l'instant i-1, $TPC_i$ désignant la commande de régulation de puissance reçue à l'instant i par l'émetteur (MS), $\Delta TPC$ désignant un incrément servant à régler la puissance d'émission de l'émetteur (MS) et k désignant le paramètre.

**4.** Procédé selon la revendication 3,
**caractérisé en ce que**
le paramètre k pour la première commande de régulation de puissance est mis sur k=1.

**5.** Procédé selon l'une des deux revendications précédentes,
**caractérisé en ce que**
le paramètre k pour la deuxième commande de régulation de puissance est mis sur k=0.

**6.** Procédé selon l'une des revendications précédentes,
**caractérisé en ce que**
la valeur estimative ($\delta$) est une valeur estimative de régulation de puissance, la régulation de puissance d'émission de l'émetteur (MS) étant ajustée selon la valeur estimative de régulation de puissance après apparition d'une interruption de transmission.

**7.** Dispositif d'émission pour un système radio,
le dispositif d'émission (MS) étant conçu de telle sorte qu'il reçoit des commandes de régulation de puissance envoyées par un autre dispositif d'émission (BS) du système radio et les utilise pour la régulation de sa propre puissance d'émission, et
le dispositif d'émission étant conçu de telle sorte que, après apparition d'une interruption de transmission dans la voie de transmission définie entre l'émetteur et le récepteur (BS) ou entre le récepteur et l'émetteur, il réajuste sa régulation de puissance d'émission selon une valeur estimative ($\delta$) qui prend en compte des commandes de régulation de puissance produites pour l'émetteur dans le passé, la valeur estimative étant déterminée dans l'émetteur en fonction d'un paramètre (k) qui indique pour chaque commande de régulation de puissance si la commande de régulation de puissance respective doit être prise en compte ou non lors de la détermination de la valeur estimative,
**caractérisé en ce que**
le dispositif d'émission (MS) est conçu pour la mise en oeuvre d'un procédé selon l'une des revendications de procédé précédentes.

**FIG 1**

Sendeleistung

k=1

k=1

Pmin

k=1

k=0

Zeit

**FIG 2**

Sendeleistung

k=1

Pmax

k=1

Zeit

**FIG 3**

Uplink

MS

Downlink

BS

FIG 4A

EP 1 501 207 B1

FIG 4B

EP 1 501 207 B1

# FIG 5
## STAND DER TECHNIK

EP 1 501 207 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19821519 A